# FASCICULE DE BREVET EUROPEEN

(11) **EP 1 283 293 B1**
(45) Date de publication et mention de la délivrance du brevet: **08.03.2006**
(21) Numéro de dépôt: 02291792.6
(22) Date de dépôt: 16.07.2002
(51) Int. Cl.: D06F 58/02, D06F 58/04

(54) **Sèche-linge à tambour horizontal rotatif**
Trockner mit einer drehenden horizontalen Trommel
Drier with a horizontal rotating drum

(30) Priorité: 17.07.2001 FR 0109530
(43) Date de publication de la demande: 12.02.2003
(73) Titulaire: Brandt Industries, 92500 Rueil Malmaison (FR)
(72) Inventeur: Geay, Jean-Claude, 85320 Chateau Guibert (FR); Soulard, Antoine, 85140 Les Essarts (FR); Ouvrard, Gilles, 85000 La Roche sur Yon (FR); Raoui, Essaid, 85000 La Roche sur Yon (FR)
(74) Mandataire: Santarelli

(56) Documents cités:
- DE-A- 2 206 038
- US-A- 3 504 444

## Description

La présente invention concerne un sèche-linge à tambour horizontal rotatif.

Elle concerne de manière générale le domaine des machines à sécher le linge ou des lavantes-séchantes, dans lesquelles le linge est placé dans un tambour rotatif traversé par un flux d'air chaud destiné à extraire l'humidité du linge.

Un circuit de circulation d'air chaud, ouvert ou fermé, permet d'introduire de l'air de séchage dans le tambour et d'évacuer cet air après son passage au travers du linge.

On connaît aussi un sèche-linge décrit dans le document DE 2 206 038 qui comprend un orifice de prise d'air dans le flanc du tambour, à proximité de l'axe de rotation du tambour.

Aussi, une partie du flux d'air chaud entrant dans le tambour peut ne pas rencontrer de linge, notamment lorsqu'une faible quantité de linge est présente et tassée sous l'effet de la gravité dans le fond du tambour.

Ce phénomène s'observe également lors des arrêts nécessaires pour l'inversion du sens de rotation du tambour, le linge occupant de préférence la partie basse du tambour.

Le but de la présente invention est de résoudre les inconvénients précités et d'améliorer l'échange thermique entre l'air de séchage et le linge dans le tambour, et ceci en vu de réduire la consommation énergétique du sèche-linge.

Le sèche-linge visé par l'invention comprend un tambour monté en rotation autour d'un axe horizontal et une gaine d'extraction d'air de séchage, la gaine d'extraction d'air comprenant un orifice de prise d'air de séchage dans le tambour débouchant dans le flanc du tambour.

Selon l'invention, l'orifice de prise d'air de séchage débouche à proximité du plan inférieur tangent à la virole du tambour, la distance séparant le point haut de l'orifice de prise d'air et un plan inférieur horizontal tangent à la virole du tambour étant inférieure ou égale au quart du rayon du tambour.

L'orifice de prise d'air est ainsi situé à une extrémité du tambour et débouche dans une partie inférieure du flanc du tambour.

On diminue ainsi le risque de voir le flux d'air emprunter un passage libre compte tenu de l'occupation préférentielle par le linge à sécher de la partie basse du tambour.

L'emplacement de l'orifice de prise d'air est ainsi situé le plus bas possible par rapport à l'axe horizontal de rotation du tambour.

La quasi-totalité du flux d'air extrait du tambour peut ainsi traverser le linge pour en retirer l'humidité.

Selon une autre caractéristique avantageuse de l'invention, l'orifice de prise d'air forme une ouverture dans le flanc du tambour symétrique par rapport à un plan vertical longitudinal du tambour.

On abaisse ainsi au mieux le point haut de l'oriflce de prise d'air pour une section de passage d'air donnée.

Selon une autre caractéristique préférée de l'invention, l'orifice de prise d'air forme une ouverture débouchant dans le flanc du tambour ayant une surface inférieure ou égale à 8 % de la surface du flanc du tambour.

La dimension volontairement réduite de l'orifice de prise d'air permet de limiter les risques de passage libre de l'air de séchage hors du tambour, sans avoir au préalable traverser le linge.

L'invention permet ainsi de réduire la consommation énergétique du sèche-linge, cette réduction de la consommation étant encore accrue pour des charges classiques lors des arrêts du tambour pour l'inversion de son sens de rotation et pour de faibles charges ne remplissant pas parfaitement le volume du tambour.

L'invention permet également d'améliorer l'homogénéité de séchage du linge en forçant l'air de séchage à traverser le linge.

D'autres particularités et avantages de l'invention apparaîtront encore dans la description ci-après.

Aux dessins annexés, donnés à titre d'exemples non limitatifs :
- la figure 1 est une vue schématique en coupe longitudinale d'un tambour d'un sèche-linge équipé de sa gaine d'entrée et de sa gaine de sortie selon un premier mode de réalisation de l'invention ;
- la figure 2 est une vue schématique en coupe longitudinale d'un tambour d'un sèche-linge équipé de sa gaine d'entrée et sa gaine de sortie selon un deuxième mode de réalisation de l'invention ; et
- la figure 3 est une vue en coupe transversale selon la ligne III - III du tambour de la figure 1.

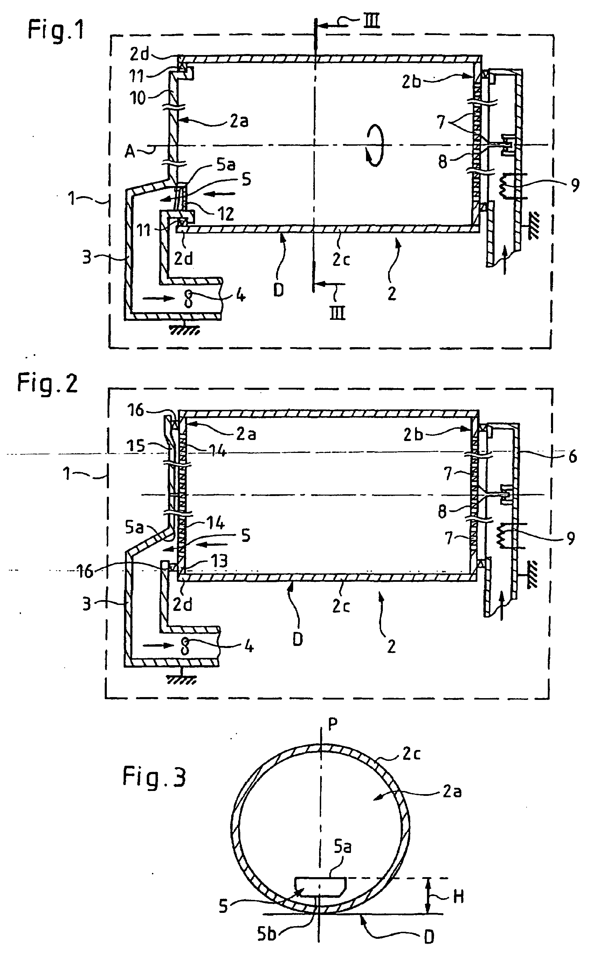

On va décrire ci-après en référence à la figure 1 une machine à sécher le linge conforme à un premier mode de réalisation de l'invention.

Le sèche-linge 1 comprend un tambour 2 monté en rotation autour d'un axe horizontal A.

De manière classique, ce tambour 2 comporte une ouverture non représentée permettant d'introduire et d'extraire le linge à sécher dans le tambour 2, soit par le dessus, soit par l'avant du sèche-linge.

Ce tambour 2 coopère avec un circuit de circulation d'air de séchage.

Ce circuit d'air de séchage peut être ouvert ou fermé.

En particulier, dans un sèche-linge dit à évacuation, le circuit d'air est ouvert et l'air de séchage est évacué à la sortie de tambour 2.

A contrario, dans un sèche-linge dit à condensation, l'air de séchage circule dans un circuit fermé et est recyclé après condensation de l'humidité extraite du linge.

Seuls les éléments nécessaires à la compréhension de l'invention sont illustrés sur les figures 1 à 3, les autres moyens nécessaires au fonctionnement du sèche-linge, bien connus de l'homme du métier, n'étant pas représentés ici.

Le circuit de circulation d'air comprend tout d'abord une gaine d'extraction 3 d'air de séchage permettant d'extraire l'air après son passage dans le tambour pour sécher le linge.

Un ventilateur 4 est disposé par exemple dans cette gaine d'extraction 3 de manière à aspirer l'air en sortie de tambour 2.

Cette gaine d'extraction 3 comprend un orifice 5 de prise d'air de séchage dans le tambour 2.

Cet orifice 5 débouche dans le flanc 2a du tambour, à proximité du plan inférieur horizontal D tangent à la virole 2c, c'est-à-dire la partie cylindrique 2c, du tambour 2.

Cet orifice de prise d'air 5 est ainsi fixe et situé dans la partie basse du tambour.

Comme bien illustré à la figure 3, la distance H séparant le point haut 5a de l'orifice de prise d'air 5 et le plan inférieur D tangent à la virole 2c du tambour 2 est inférieure ou égale au quart du rayon du tambour 2.

De préférence, pour un tambour de 290 mm de rayon, cette distance H demeure inférieure à 70 mm de telle sorte que l'air de séchage extrait du tambour 2 sort de ce dernier de préférence à proximité du fond du tambour 2.

On notera en particulier que cet orifice de prise d'air 5 de la gaine d'extraction 3 est fixe et demeure à proximité du fond du tambour 2 lors de la rotation de ce dernier.

Au mieux, l'orifice de prise d'air 5 sera tangent à la périphérie 2d de la virole du tambour 2.

Par conséquent, bien que le linge ait tendance à s'accumuler dans le fond du tambour, notamment lorsque celui-ci tourne à faible vitesse ou inverse son sens de rotation autour de l'axe de rotation A, l'air de séchage extrait du tambour 2 dans sa partie basse, traverse le linge avant de sortir du tambour 2.

Comme illustré à la figure 3, l'orifice de prise d'air 5 forme une ouverture débouchant dans le flanc 2a du tambour symétrique par rapport à un plan vertical longitudinal P du tambour 2.

Cette forme symétrique d'ouverture permet, pour une section de passage d'air donnée, d'abaisser au mieux le point haut 5a de l'orifice 5.

En outre, afin de limiter les possibilités de passage libre de l'air de séchage, cet orifice de prise d'air 5 forme une ouverture de surface limitée dans le flanc 2a du tambour 2.

De préférence, les dimensions de cet orifice 5 sont telles que la surface occupée par l'ouverture demeure inférieure à environ 8 % de la surface totale du flanc 2a du tambour 2.

En outre, l'orifice de prise d'air 5 a un contour inférieur 5b dans le flanc 2a du tambour 2 suivant au mieux le contour de la virole 2c du tambour 2.

Au mieux, ce contour inférieur 5b de l'orifice 5 peut être de forme sensiblement courbe et concentrique avec la virole 2c du tambour 2.

Le sèche-linge 1 comporte en outre, sur le flanc opposé 2b du tambour 2, une gaine 6 d'amenée d'air de séchage comprenant au moins un orifice d'entrée d'air de séchage 7 dans le tambour 2.

Ici, le flanc opposé 2b du tambour est obturé par un filtre 8 percé d'ouvertures 7 formant les orifices 7 d'entrée d'air de séchage.

De manière classique, une résistance de chauffage 9 est disposée dans la gaine 6 d'amenée d'air de séchage afin de chauffer l'air avant son introduction dans le tambour 2.

Dans le premier mode de réalisation illustré à la figure 1, une paroi d'obturation 10 s'étend parallèlement au flanc du tambour 2 et est montée de manière étanche contre la périphérie 2d de la virole de ce tambour rotatif 2.

Un joint annulaire périphérique 11 permet d'assurer le montage en rotation de la virole 2c du tambour 2 sur cette paroi d'obturation fixe 10.

L'orifice de prise d'air de séchage 5 débouche dans cette paroi d'obturation 10, à proximité du fond du tambour 2.

Cette paroi d'obturation 10 forme ainsi le flanc 2a du tambour 2 de telle sorte que la périphérie 2d de la virole du tambour 2 est montée de manière étanche directement contre la paroi d'obturation 10.

Un filtre 12 peut être disposé en travers de l'orifice de prise d'air de séchage 5.

Ce mode de réalisation permet de disposer l'orifice de prise d'air 5 au plus proche du plan inférieur horizontal D tangent à la virole 2c du tambour 2.

Un deuxième mode de réalisation est illustré à la figure 2.

Il est en tout point identique au premier mode de réalisation décrit précédemment, hormis le montage du tambour 2 sur la gaine de sortie 3.

Ici, le tambour 2 comporte un flasque 13 solidaire de la périphérie 2d de la virole 2c du tambour 2, constituant le flanc 2a du tambour 2.

Ce flasque 13 comporte une série de perforations 14 sur la quasi-totalité de la surface du flanc 2a du tambour.

Une paroi d'obturation 15 s'étend parallèlement à ce flasque perforé 13, l'orifice de prise d'air de séchage 5 débouchant dans cette paroi d'obturation 15, en partie basse du tambour 2.

La paroi d'obturation 15 est montée de manière étanche contre le flasque 13 grâce à un joint annulaire périphérique 16, conçu de telle sorte que le tambour 2 et le flasque 13 sont montés en rotation contre la paroi d'obturation fixe 15.

Le sèche-linge 1 conforme à l'invention comporte ainsi un orifice de prise d'air de séchage 5 disposé au plus près de la virole du tambour 2, débouchant dans la partie basse du tambour rotatif 2.

Bien entendu, de nombreuses modifications peuvent être apportées aux exemples de réalisation décrits précédemment sans sortir du cadre de l'invention.

En particulier, bien qu'on ait décrit ici un sèche-linge, l'invention peut être mise en oeuvre de manière identique dans une lavante-séchante incorporant à la fois des moyens de lavage et de séchage du linge.

En outre, l'invention est adaptée autant à un sèche-linge à chargement par le dessus qu'à un sèche-linge à chargement frontal.

## Revendications

1. Sèche-linge comprenant un tambour (2) monté en rotation autour d'un axe horizontal (A) et une gaine (3) d'extraction d'air de séchage, la gaine d'extraction (3) comprenant un orifice (5) de prise d'air de séchage dans le tambour (2) débouchant dans un flanc (2a) du tambour, **caractérisé en ce que** l'orifice (5) de prise d'air de séchage dans le tambour (2) débouche à proximité du plan horizontal inférieur (D) tangent à la virole (2c) du tambour (2), la distance (H) séparant le point haut (5a) de l'orifice (5) de prise d'air et le plan horizontal inférieur (D) tangent à la virole (2c) du tambour (2) étant inférieure ou égale au quart du rayon du tambour (2).

2. Sèche-linge conforme à la revendication 1, **caractérisé en ce que** l'orifice (5) de prise d'air forme une ouverture dans le flanc (2a) du tambour (2) symétrique par rapport à un plan vertical longitudinal (P) du tambour (2).

3. Sèche-linge conforme à l'une des revendications 1 ou 2, **caractérisé en ce que** l'orifice (5) de prise d'air forme une ouverture dans le flanc (2a) du tambour (2) ayant une surface inférieure ou égale à 8 % de la surface du flanc (2a) du tambour (2).

4. Sèche-linge conforme à l'une des revendications 1 à 3, **caractérisé en ce qu'**il comporte une gaine (6) d'amenée d'air de séchage comprenant des orifices (7) d'entrée d'air de séchage dans le tambour (2) débouchant dans un flanc opposé (2b) du tambour (2).

5. Sèche-linge conforme à l'une des revendications 1 à 4, **caractérisé en ce qu'**il comprend une paroi d'obturation (10, 15) s'étendant parallèlement au flanc (2a) du tambour (2) et adaptée à être montée de manière étanche sur le flanc (2a) du tambour (2), l'orifice (5) de prise d'air de séchage débouchant dans ladite paroi d'obturation (10, 15).

6. Sèche-linge conforme à la revendication 5, **caractérisé en ce que** la périphérie (2d) de la virole (2c) du tambour (2) est montée de manière étanche en rotation sur la paroi d'obturation (10).

7. Sèche-linge conforme à la revendication 5, **caractérisé en ce que** le tambour (2) comporte un flasque (13) solidaire de la virole (2c) du tambour (2), le flasque (13) comportant une série de perforations (14) de passage d'air de séchage, et **en ce que** le flasque (13) est monté de manière étanche en rotation contre la paroi d'obturation (15).

## Patentansprüche

1. Wäschetrockner mit einer um eine horizontale Achse (A) drehbar angeordneten Trommel (2) und einem Abluftrohr (3) für die Trockenluft, wobei das Abluftrohr (3) eine Öffnung (5) zum Abführen der Trockenluft aus der Trommel (3) aufweist, welche in einem Seitenteil (2a) der Trommel mündet, **dadurch gekennzeichnet, dass** die Öffnung (5) zum Abführen der Trockenluft aus der Trommel (2) in der Nähe der unteren horizontalen Ebene (D) mündet, die eine Tangente an den Mantel (2c) der Trommel (2) ist, wobei der Abstand (H), der den oberen Punkt (5a) der Öffnung (5) zum Abführen der Trockenluft von der den Mantel (2c) der Trommel (2) tangierenden unteren horizontalen Ebene (D) trennt, kleiner als oder gleich dem Viertel des Radius der Trommel ist.

2. Wäschetrockner nach Anspruch 1, **dadurch gekennzeichnet, dass** die Öffnung (5) zum Abführen der Trockenluft eine Öffnung im Seitenteil (2a) der Trommel (2) bildet, die bezüglich einer vertikalen Längsebene (P) der Trommel symmetrisch ist.

3. Wäschetrockner nach einem der Ansprüche 1 oder 2, **dadurch gekennzeichnet, dass** die Öffnung (5) zum Abführen der Trockenluft eine Öffnung im Seitenteil (2a) der Trommel (2) bildet, deren Fläche kleiner als oder gleich 8 % der Fläche des Seitenteils (2a) der Trommel (2) ist.

4. Wäschetrockner nach einem der Ansprüche 1 bis 3, **dadurch gekennzeichnet, dass** er ein Rohr (6) zum Zuführen der Trockenluft umfasst, das Öffnungen (7) für den Eintritt der Trockenluft in die Trommel (2) aufweist, welche in einen gegenüberliegenden Seitenteil (2b) der Trommel (2) münden.

5. Wäschetrockner nach einem der Ansprüche 1 bis 4, **dadurch gekennzeichnet, dass** er eine Verschlusswand (10, 15) aufweist, die parallel zum Seitenteil (2a) der Trommel (2) verläuft und dichtend am Seitenteil (2a) der Trommel (2) anbringbar ist, wobei die Öffnung (5) zum Abführen der Trockenluft in die Verschlusswand (10, 15) mündet.

6. Wäschetrockner nach Anspruch 5, **dadurch gekennzeichnet, dass** der Umfang (2d) des Mantels (2c) der Trommel (2) in dichter Weise drehbar an der Verschlusswand (10) gelagert ist.

7. Wäschetrockner nach Anspruch 5, **dadurch gekennzeichnet, dass** die Trommel (2) einen mit dem Mantel (2c) der Trommel (2) fest verbundenen Flansch (13) aufweist, wobei der Flansch (13) eine Reihe von Durchgangslöchern (14) für die Trockenluft aufweist, und dass der Flansch (13) in dichter Weise drehbar an der Verschlusswand (15) gelagert ist.

## Claims

1. A tumble dryer comprising a drum (2) rotatably mounted about a horizontal axis (A) and a duct (3) for extracting drying air, the extraction duct (3) comprising an outlet aperture (5) for drying air in the drum (2) opening in a flank (2a) of the drum, **characterized in that** the outlet aperture (5) for drying air in the drum (2) opens close to the lower horizontal plane (D) tangential to the surrounding wall (2c) of the drum (2), the distance (H) between the upper point (5a) of the air outlet aperture (5) and the lower horizontal plane (D) tangential to the surrounding wall (2c) of the drum (2) being less than or equal to a quarter of the radius of the drum (2).

2. A tumble dryer according to claim 1, **characterized in that** the air outlet aperture (5) forms an opening in the flank (2a) of the drum (2) symmetrical with respect to a longitudinal vertical plane (P) of the drum (2).

3. A tumble dryer according to one of claims 1 or 2, **characterized in that** the air outlet aperture (5) forms an opening in the flank (2a) of the drum (2) having an area less than or equal to 8 % of the area of the flank (2a) of the drum (2).

4. A tumble dryer according to one of claims 1 to 3, **characterized in that** it comprises a drying air supply duct (6) comprising apertures (7) for inlet of drying air into the drum (2) opening in an opposite flank (2b) of the drum (2).

5. A tumble dryer according to one of claims 1 or 4, **characterized in that** it comprises an obturating wall (10, 15) extending parallel to the flank (2a) of the drum (2) and adapted for fluid-tight mounting on the flank (2a) of the drum (2), the air outlet aperture (5) opening in said obturating wall (10, 15).

6. A tumble dryer according to claim 5, **characterized in that** the periphery (2d) of the surrounding wall (2c) of the drum (2) is mounted to rotate in fluid-tight manner on the obturating wall (10).

7. A tumble dryer according to claim 5, **characterized in that** the drum (2) comprises a plate (13) attached to the surrounding wall (2c) of the drum (2), the plate (13) comprising a series of perforations (14) for passage of drying air, and **in that** the plate (13) is mounted to rotate in fluid-tight manner against the obturating wall (15).
